# EUROPÄISCHE PATENTSCHRIFT

(11) **EP 1 020 043 B1**
(45) Veröffentlichungstag und Bekanntmachung des Hinweises auf die Patenterteilung: **10.04.2002**
(21) Anmeldenummer: 98954118.0
(22) Anmeldetag: 04.09.1998
(51) Int. Cl.: H04B 7/26, H04J 3/02, H04Q 7/38

(54) **VERFAHREN UND KOMMUNIKATIONSSYSTEM ZUR DRAHTLOSEN TDMA INFORMATIONSÜBERTRAGUNG ZWISCHEN BASISTATIONEN UND MOBILEN MIT ZUFALLSGESTEUERTEN AUSWAHL DER AUFWÄRTSKANÄLE**
METHOD AND COMMUNICATION SYSTEM FOR WIRELESS TDMA INFORMATION TRANSFER BETWEEN BASE STATIONS AND MOBILE STATIONS WITH RANDOMLY CONTROLLED SELECTION OF UPLINK CHANNELS
PROCEDE ET SYSTEME DE COMMUNICATION POUR LA TRANSMISSION D'INFORMATIONS SANS FIL AMRT ENTRE DES STATIONS DE BASES ET DES STATIONS MOBILES AVEC SELECTION ALEATOIRE DES VOIES DE TRANSMISSION

(30) Priorität: 30.09.1997 DE 19743350
(43) Veröffentlichungstag der Anmeldung: 19.07.2000
(73) Patentinhaber: SIEMENS AKTIENGESELLSCHAFT, 80333 München (DE)
(72) Erfinder: KREUL, Theo, D-45525 Hattingen (DE); PILLEKAMP, Klaus-Dieter, D-40699 Erkrath (DE)
(86) Internationale Anmeldenummer: DE9802619
(87) Internationale Veröffentlichungsnummer: WO9917468

(56) Entgegenhaltungen:
- EP-A- 0 680 168
- DE-C- 3 304 451
- US-A- 5 260 944
- US-A- 5 513 183

## Beschreibung

Die Erfindung betrifft ein Verfahren und ein Kommunikationssystem zur Informationsübertragung gemäß dem Oberbegriff des Patentanspruchs 1 bzw. des Patentanspruchs 17, bei dem Informationen in Informationsblöcken zwischen Basisstationen und Mobilstationen drahtlos übertragen werden.

Bekanntlich können in Kommunikationssystemen, wie beispielsweise einem Mobil-Kommunikationssystem nach dem GSM-Standard (Global System for Mobile Communication), die Informationen drahtlos zwischen Mobilstationen und Basisstationen über eine Luftschnittstelle übertragen werden. Auch andere Kommunikationssysteme, wie beispielsweise ein Schnurlos-System nach dem DECT-Standard (Digital Enhanced Cordless Telecommunication), nutzen die drahtlose Informationsübertragung zwischen Mobilstationen und festen Basisstationen, die Bestandteil eines leitungsgebundenen Kommunikationsnetzes sind. Dabei werden Sprachsignale und/oder Datensignale als digitale Informationen auf (physikalischen) Übertragunskanälen in einer Aufwärtsübertragungsrichtung (Uplink) von den Mobilstationen gesendet und von den Basisstationen empfangen, sowie in einer Abwärtsübertragungsrichtung (Downlink) von den Basisstationen gesendet und von den Mobilstationen empfangen.

Durch die begrenzten Funkressourcen in einem Kommunikationssystem der oben genannten Art kann jedes Informationsübertragungsverfahren für digitale Sprach- und Datenübertragung nur eine begrenzte Anzahl von Übertragungskanälen für die Aufwärtsübertragungsrichtung sowie für die Abwärtsübertragungsrichtung bereitstellen. Die Anzahl der zur Informationsübertragung gleichzeitig nutzbaren Übertragungskanäle wird bestimmt durch ein Vielfachzugriffsverfahren, wie das für Zeitmultiplex (TDMA), Frequenzmultiplex (FDMA) und/oder Codemultiplex (CDMA). Bei Verwendung des TDMA-Verfahrens werden Informationsblöcke in mehreren Zeitschlitzen (time slots) parallel übertragen, während bei dem FDMA-Verfahren in jedem von mehreren Frequenzbändern einer bestimmten Bandbreite ein Cbertragungsrahmen gesendet und empfangen werden kann. Bei dem CDMA-Verfahren werden unterschiedliche Codes mit zugehörigen Trainingssequenzen zur Verfügung gestellt, die den unterschiedlichen mobilen Teilnehmern bzw. Mobilstationen zuordenbar sind. Jeder Uplink-Übertragungskanal und Downlink-Übertragungskanal ist damit eindeutig bestimmt durch das verwendete Vielfachzugriffsverfahren oder eine Kombination unterschiedlicher Vielfachzugriffsverfahren, das heisst beispielsweise durch einen CDMA-Code, einen TDMA-Zeitschlitz und ein FDMA-Frequenzband bei Kombination der drei obigen Vielfachzugriffsverfahren.

Insbesondere bei der Sprachübertragung wird häufig nur jeweils eine Übertragungsrichtung zur Informationsübertragung genutzt, was einem Nutzungsgrad von ca. 50% der Sprachverbindung entspricht. Da der Informationsfluss darüber hinaus diskontinuierlich mit unterschiedlich langen Unterbrechungen - Pausen - ist, wird auch die jeweils aktive eine Übertragungsrichtung nicht voll ausgenutzt, was einen Nutzungsgrad der Sprachübertragung von ca. 80% bedeutet. In Kombination ergibt sich somit ein resultierender Gesamtnutzungsgrad der Sprachübertragung von nicht einmal 50% der Übertragungskapazität für die tatsächliche Übermittlung von Informationen. Durch geeignete Sprachcodierer (speech coder) besteht die Möglichkeit, die unterschiedlich langen Sprachpausen bei der Sprachübertragung zu detektieren und die Vergabe des Übertragungskanals auf die aktiven Phasen der Informationsübermittlung in der Aufwärtsübertragungsrichtung und Abwärtsübertragungsrichtung zu beschränken.

Aus der Dl ist ein Verfahren zur bidirektionalen Informationsübertragung in einem Fahrzeug-Leitsystem zwischen einer Hauptstation, z.B. einer Bake, und mehreren mobilen Unterstationen, z.B. Fahrzeugen, mittels Funksignalen oder Infrarotlichtsignalen bekannt. Nach Empfang gültiger Daten-blöcke von den Unterstationen sendet die Hauptstation an alle Unterstationen ein Quittungssignal. Dieses Signal weist Codenummern nur von derjenigen Unterstationen auf, deren Daten-blöcke einwandfrei empfangen wurden. Unterstationen, bei deren Datenübertragung es zu Kollisionen kam, veranlassen aufgrund ihrer in dem Quittungssignal fehlenden Codenummer eine erneute Übertragung des gesendeten Datenblocks zu der Hauptstation.

Aufgabe der vorliegenden Erfindung ist es, ein Verfahren und ein Kommunikationssystem zur drahtlosen Informationsübertragung der eingangs genannten Art anzugeben, das hinsichtlich der Ausnutzung der Übertragungskapazität optimiert wird und damit eine Erhöhung der Anzahl mobiler Teilnehmer bzw. Mobilstationen, die bei gleichbleibender Übertragungskapazität des Kommunikationssystems versorgt werden können, erlaubt.

Diese Aufgabe wird gemäß der Erfindung durch die Merkmale des Patentanspruchs 1 hinsichtlich des Verfahrens und durch die Merkmale des Patentanspruchs 21 hinsichtlich des Kommunikationssystems gelöst. Ebenso sind eine Mobilstation und eine Basisstation zur Durchführung des erfindungsgemäßen Verfahrens angegeben. Weiterbildungen der Erfindung sind den Unteransprüchen zu entnehmen.

Gemäß dem Gegenstand der Erfindung werden die Übertragungskanäle für die Aufwärtsübertragungsrichtung von den Mobilstationen zufallsgesteuert ausgewählt, während die Übertragungskanäle für die Abwärtsübertragungsrichtung von den Basisstationen jeweils durch Mehrfachzuordnung zu mindestens zwei Mobilstationen vergeben werden.

Bei dem Kommunikationssystem laut der Erfindung weisen die Mobilstationen Mittel zur zufallsgesteuerten Auswahl der Übertragungskanäle für die Aufwärtsübertragungsrichtung und die Basisstationen Mittel zur Vergabe der Übertragungskanäle für die Abwärtsübertragungsrichtung durch Mehrfachzuordnung zu mindestens zwei Mobilstationen auf.

Anhand der über einen Zufallsprozess gesteuerten Auswahl der Übertragungskanäle für die Aufwärtsübertragungsrichtung (Uplink) durch die Mobilstationen selbst, wird eine statistisch gleichmäßige Ausnutzung der Übertragungskapazität erreicht. Somit können dieselben Uplink-Übertragungskanäle auch in den Pausen der Informationsübertragung - insbesondere während der Sprachpausen bei der Sprachübertragung - für weitere drahtlose Kommunikationsverbindungen genutzt werden, was eine Erhöhung der Teilnehmeranzahl bzw. der Anzahl der Mobilstationen durch die Basisstationen ermöglicht. Eine höhere Teilnehmeranzahl bei gleicher Übertragungskapazität bewirkt eine optimierte Ausnutzung der gleichzeitig nutzbaren Übertragungskanäle. Die Belegung der Uplink-Übertragungskanäle ist somit nicht mehr an die Zuweisung durch die Basisstationen gebunden und auf die aktiven Phasen der tatsächlichen Informationsübertragung in der herkömmlichen Art und Weise beschränkt. Die verbesserte Ausnutzung der Übertragungskapazität wird durch gezielte Vergabe der Downlink-Übertragungskanäle anhand einer Mehrfachzuordnung desselben Übertragungskanals zu mehreren Mobilstationen unterstützt. Dies hat zur Folge, dass auch in den Übertragungspausen einer Kommunikationsverbindung Informationen über dieselbe Kommunikationsverbindung zu einem anderen mobilen Teilnehmer bzw. dessen Mobilstation im Downlink übertragen werden können.

Da die Basisstationen die jeweils aktiven Downlink-Übertragungskanäle kennen, können diese die möglichen Kollisionen breits vorab durch steuerungstechnische Maßnahmen in einfacher Weise verhindern. Anzahl und Häufigkeit möglicher Kollisionen, hervorgerufen durch das Zugreifen verschiedener Mobilstationen zur gleichen Zeit auf denselben Übertragungskanal, können von den Basisstationen erkannt und registriert werden. Durch eine Speicherung der Aktivitäten und/oder Blokkierungen auf den Übertragungskanälen kann die Basisstation als "lernende Steuerungseinrichtung" eine schrittweise Erhöhung der Teilnehmeranzahl bzw. der Anzahl der Mobilstationen bis zu einer Maximalanzahl vornehmen, bei der die gegenseitigen Blockierungen auf den Übertragungskanälen unter einer tolerierbaren Grenze bleiben. Durch das schrittweise Heranführen an ein Optimum unter Berücksichtigung einer statistischen Bewertung der Übertragungskanäle wird die Basisstation in die Lage versetzt, eine optimale Auslastung der bestehenden Übertragungskapazität auf der Luftschnittstelle zu erzielen. Der resultierende Gesamtnutzungsgrad der Übertragungskanäle zur drahtlosen Informationsübertragung in beiden Übertragunsrichtungen kann durch das erfindungsgemäße Verfahren und Kommunikationssystem gegenüber dem bekannten statischen Verfahren der Vergabe und Zuweisung der jeweiligen Übertragungskanäle nur durch die Basisstationen, resultierend in einer mangelnden Ausnutzung der Übertragungskanäle für die tatsächliche Informationsübertragung, wesentlich erhöht werden. Dies ist insbesondere für zukünftige Kommunikationssysteme wie beispielsweise einem universellen Mobilfunk-Kommunikationssystem (Universal Mobile Telecommunication System, UMTS) von Vorteil, die ein Vielfachzugriffsverfahren, wie das für Zeitmulitplex (TDMA), allein oder zusammen mit anderen Vielfachzugriffsverfahren - z.B. dem Vielfachzugriffsverfahren für Frequenzmultiplex (FDMA) und/oder für Codemultiplex(CDMA) - nutzen.

Von besonderem Vorteil ist es, wenn jeder Informationsblock eine Teilnehmerkennung enthält, die bei Einbuchen des mobilen Teilnehmers in das Kommunikationssystem der Mobilstation zugewiesen wird. Damit ist eine eindeutige Identifikation und Zuordnung der in den Basisstationen eintreffenden Informationsblöcke zu den mobilen Teilnehmern bzw. zu den Mobilstationen auf einfache Weise möglich. Daher werden in den Basisstationen eintreffende Informationsblöcke auf das Vorliegen der Teilnehmerkennung ausgewertet und die in den Informationsblöcken enthaltenen Informationen teilnehmerbezogen bzw. mobilstationsbezogen zugeordnet.

Gemäß einer anderen vorteilhaften Weiterbildung der Erfindung wird die Mehrfachzuordnung der Übertragungskanäle für die Abwärtsübertragungsrichtung von den Basisstationen zeitversetzt durchgeführt, um die Wahrscheinlichkeit einer möglichen Kollision durch gleichzeitige Nutzung desselben Übertragungskanals durch mehrere Mobilstationen zu reduzieren.

Eine andere vorteilhafte Ausgestaltung der Erfindung sieht vor, dass von den Basisstationen, wenn eine gleichzeitige Nutzung des Downlink-Übertragungskanals durch mehrere Mobilstationen droht, ein Kanalwechsel zu einer der Mobilstationen signalisiert wird. Dies kann die Mobilstation sein, die den gerade aktiven Downlink-Übertragungskanal nutzt, sodaß nach der Zuweisung eines von der Basisstation vergebenen neuen Übertragungskanals an diese Mobilstation der nun freie Übertragungskanal, der von dieser Mobilstation ursprünglich benutzt wurde, zur Downlink-Informationsübertragung zu einer weiteren Mobilstation verwendet werden kann. Die kann auch die Mobilstation sein, die den gerade aktiven Übertragungskanal nicht nutzt, aber durch Mithören auf dem aktiven Übertragungskanal über den von der Basisstation initiierten Kanalwechsel informiert wird.

Es hat sich als vorteilhaft erwiesen, eine Steuerinformation zur Signalisierung des Kanalwechsels in den Informationsblock des aktiven Downlink-Übertragungskanals einzutragen. Darüber hinaus enthält dieser Informationsblock auch eine Kanalinformation zur Kennzeichnung des von der Basisstation vergebenen neuen Downlink-Übertragungskanals. Vorzugsweise wird von den Basisstationen die Steuerinformation gesetzt sowie die Kanalinformation für die Abwärtsübertragungsrichtung an einer fest definierten Position in den Informationsblock eingefügt. Dies bedeutet, dass bei gesetzter Steuerinformation die Kanalinformation über den neuen Übertragungskanal immer an derselben Stelle im Informationsblock nach einem erforderlichen Kanalwechsel der zuletzt aktiven Mobilstation vorhanden ist. Zur Vermeidung von Informationsverlusten, die durch einen temporär blockierten Downlink-Übertragungskanäl bis zur Umschaltung auf einen anderen Downlink-Übertragungskanal verursacht werden können, werden die Informationen gemäß einer vorteilhaften Weiterbildung der Erfindung in einen Zwischenspeicher der Basisstationen teilnehmerbezogen bzw. mobilstationsbezogen eingetragen.

Eine andere vorteilhafte Ausgestaltung der Erfindung besteht darin, zur Auswahl der Uplink-Übertragungskanäle durch die Mobilstationen zumindest eine Zufallsfolge zu erzeugen. Vorzugsweise wird diese Zufallsfolge mit einer Kennung, die die Eindeutigkeit in der Funkzelle gewährleistet - vorteilhafterweise mit der Teilnehmerkennung, die beim Einbuchen des mobilen Teilnehmers in das Kommunikationssystem der Mobilstation zugewiesen wird -, zu verknüpfen. Somit werden Identitäten bei der zufallsgesteuerten Auswahl der Uplink-Übertragungskanäle durch verschiedene Mobilstationen auf einfache Art und Weise vermieden. Diese Ausgestaltung ist auch aufwandsarm, da die Teilnehmerkennung ohnehin in der Mobilstation gespeichert ist.

Von besonderem Vorteil ist es, wenn die Anzahl der Mobilstationen, denen Downlink-Übertragungskanäle mehrfach zugeordnet werden, von den Basisstationen schrittweise bis zu einer Maximalanzahl erhöht wird. Dabei werden Informationen über Aktivitäten und/oder Blockierungen auf den Übertragungskanälen von den Basisstationen gespeichert und ausgewertet. Damit ist eine lernende Basisstation realisiert, die die zulässige Anzahl der mobilen Teilnehmer bzw. der Mobilstationen nach und nach an ein Optimum heranführt, bei dem eine optimale Ausnutzung der begrenzten Funkressourcen zur drahtlosen Informationsübertragung bei noch vertretbaren Störungen erzielt wird.

Eine Mobilstation zur Durchführung des erfindungsgemäßen Verfahrens weist Mittel zur zufallsgesteuerten Auswahl der Uplink-Übertragungskanäle auf. Ebenso weist eine Basisstation, die zur Durchführung des erfindungsgemäßen Verfahrens geeeignet ist, Mittel zur Vergabe der Downlink-Übertragungskanäle jeweils durch Mehrfachzuordnung zu mindestens zwei Mobilstationen auf.

Die Erfindung wird anhand eines in Figuren dargestellten Ausführungsbeispiels näher erläutert. Im einzelnen zeigen
- Figur 1: eine Prinzipdarstellung der Übertragungskanäle bei Kombination mehrerer Vielfachzugriffsverfahren zur drahtlosen Informationsübertragung,
- Figur 2: eine Prinzipdarstellung der Blockstruktur der in Zeitschlitzen gemäß dem Vielfachzugriffsverfahren für Zeitmultiplex übertragenen Informationsblöcke,
- Figur 3: eine Prinzipdarstellung eines Kommunikationssystems mit mehreren Mobilstationen und Basisstationen zur drahtlosen Informationsübertragung in Übertragungskanälen für die Aufwärtsübertragungsrichtung und die Abwärtsübertragungsrichtung, und
- Figur 4: ein Ablaufdiagramm zur dynamischen Vergabe der Übertragungskanäle für die drahtlose Informationsübertragung in dem Kommunikationssystem nach Figur 3.

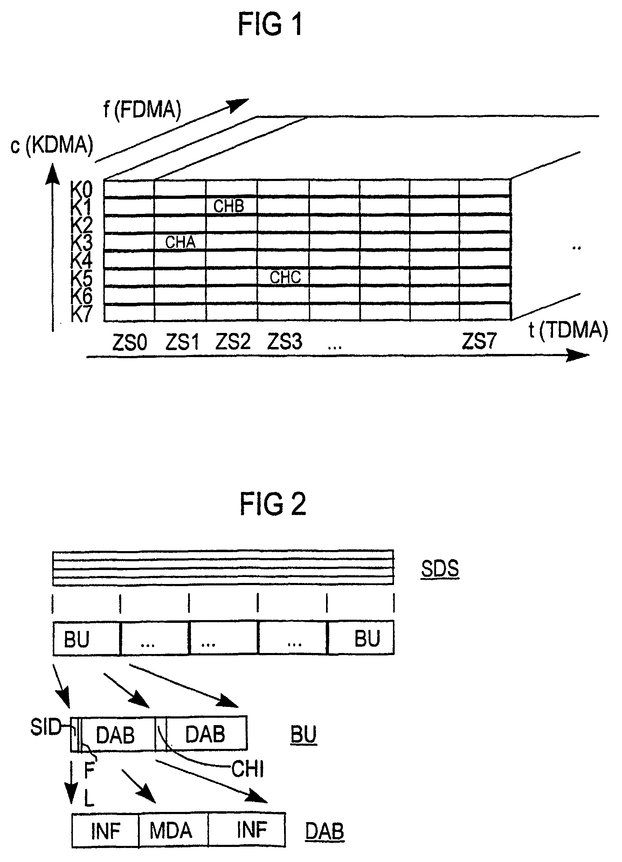

Figur 1 zeigt in schematischer Darstellung eine Kombination verschiedener Vielfachzugriffsverfahren, die zur drahtlosen Übertragung von Informationen - z.B. Sprache oder Daten - zwischen mehreren Mobilstationen und Basisstationen eines Kommunikationssystems verwendet werden. Die Anzahl der für die Informationsübertragung gleichzeitig nutzbaren physikalischen Verbindungen ist durch die im vorliegenden Beispiel betrachteten Vielfachzugriffsverfahren für Zeitmultiplex (TDMA), für Codemultiplex (CDMA) und für Frequenzmultiplex FDMA) bestimmt. Dabei wird ein Übertragungsrahmen (frame) gemäß der TDMA-Komponente in beispielsweise acht Zeitschlitze (time slots) ZS0 bis ZS7 aufgeteilt. Die Frequenz-Komponente FDMA ermöglicht einen wiederholt auftretenden breitbandigen Frequenzbereich, beispielsweise der Bandbreite von 1,6 MHz, in dem mehrere schmalbandige Übertragungsbänder (Frequenzbänder), beispielsweise der Bandbreite 200 kHz, zusammengefaßt sind. Der nunmehr spektral breitere Frequenzkanal wird von den Teilnehmern bzw. Mobilstationen derart belegt, daß die vormals schmalbandigeren Signale durch Verwenden von CDMA-Codes spektral gespreizt werden. Die CDMA-Komponente ist durch beispielsweise acht Codes K0...K7 realisiert, die in jedem Zeitschlitz ZS0... parallel genutzt werden können. Innerhalb des breitbandigen Frequenzbereiches werden die aufeinanderfolgenden Zeitschlitze ZS0... derart gegliedert, daß die einzelnen Zeitschlitze des Übertragungsrahmens wiederkehrend von einer Gruppe von durch verschiedene CDMA-Codes K unterscheidbaren Verbindungen genutzt werden. Dies bedeutet, daß in jedem Frequenzband pro Übertragungsrahmen jeweils die Zeitschlitze ZS0...ZS7 und in jedem Zeitschlitz die Codes K0...K7 zur Verfügung stehen. Für ein UMTS-Kommunikationssystem (Universal Mobile Telecommunication System) oder andere Systeme der 3. Generation sind Frequenzen im Frequenzband von ca. 2000 MHz vorgesehen. Bei einem Kommunikationssystem, das zumindest eine CDMA-Teilnehmerseparierung und auf der Luftschnittstelle zusätzlich eine TDMA-Teilnehmerseparierung aufweist, wird empfangsseitig ein JD-Verfahren (gemeinsame Detektion - Joint Detection) angewendet, um unter Kenntnis von CDMA-Codes mehrerer Teilnehmer eine verbesserte Detektion der übertragenen Informationen vorzunehmen. So sind beispielhafte Übertragungskanäle CHA, CHC, CHB gemäß der Darstellung in Figur 1 durch individuelle Spreizcodes K3, K1, K5 und zugehörige Zeitschlitze ZS1, ZS2, ZS3 in einem Übertragungsrahmen eindeutig gekennzeichnet und unterscheidbar. Bei den Übertragungskanälen wird zwischen Übertragungskanälen für die Aufwärtsübertragungsrichtung (Uplink) von den Mobilstationen zu den Basisstationen und Übertragungskanälen für die Abwärtsübertragungsrichtung (Downlink) von den Basisstationen zu den Mobilstationen unterschieden.

Die Informationen werden in Informationsblöcken (bursts) in den Zeitschlitzen übertragen, die Mitambeln mit bekannten Symbolen enthalten. Diese Mitambeln werden im Sinne von Trainingssequenzen zum empfangsseitigen Abstimmen der Basisstationen genutzt. Die empfangende Basisstation führt anhand der eintreffenden Mitambeln eine Schätzung der Kanalimpulsantworten für verschiedene Übertragungskanäle durch. Die geschätzten Kanalimpulsantworten werden zur späteren Informationsdetektion benötigt.

Figur 2 zeigt eine schematische Darstellung der Blockstruktur der Informationsblöcke, die in Zeitschlitzen gemäß dem Vielfachzugriffsverfahren für Zeitmultiplex übertragen werden. Dabei sei angenommen, daß es sich im Beispiel um eine Sprachübertragung handelt. Eine Sequenz SDS von Sprachinformationen wird über die Luftschnittstelle drahtlos gesendet und empfangen. Empfangsseitig läßt sich die Sprachinformations-Sequenz SDS in mehrere Informationsblöcke BU, die Nutzinformationen enthalten, durch entsprechende Sprachcodierer (speech coder) aufteilen. Dadurch besteht die Möglichkeit, die unterschiedlich langen Sprachpausen bei der diskontinuierlichen Sprachübertragung in der Sprachinformations-Sequenz SDS zu detektieren und die Vergabe des Übertragungskanals für die jeweilige Aufwärtsübertragungsrichtung oder Abwärtsübertragungsrichtung auf die aktiven Phasen der Informationsübermittlung zu beschränken. Während der aktiven Phase werden die Informationen somit in einem oder mehreren unmittelbar aufeinanderfolgenden Informationsblöcken BU über den Übertragungskanal übertragen.

Jeder Informationsblock BU wird in mehrere Informationsteilblöcke DAB unterteilt, von denen jeder Informationsteilblock DAB innerhalb eines Zeitschlitzes des Übertragungsrahmens übertragen wird. Zur eindeutigen Identifikation enthält jeder Informationsblock BU eine Teilnehmerkennung SID, die vorzugsweise den Nutzinformationen vorangestellt ist. Durch Auswertung der Teilnehmerkennung SID in den eintreffenden Informationsblöcken ordnet die Basisstation die Informationen den aktiven Teilnehmern bzw. Mobilstationen zu. Einbuchen eines mobilen Teilnehmers in das Kommunikationssystem wird die Teilnehmerkennung SID der Mobilstation zugewiesen. Darüber hinaus wird zu diesem Zeitpunkt auch die Lage der Übertragungskanäle für beide Übertragungsrichtungen durch die Kombination von Zeitschlitz, Spreizcode und Frequenzkanal festgelegt. Jeder Informationsteilblock DAB enthält die Sprachinformationen INF sowie die Mitambeln MDA mit den bekannten Symbolen als Trainingssequenzen.

Erfindungsgemäß erfolgt eine gezielte Vergabe der Übertragungskanäle für den Downlink durch die Basisstation sowie eine zufallsgesteuerte Auswahl der Übertragungskanäle für den Uplink durch die Mobilstationen selbst. Sind mehr mobile Teilnehmer bzw. Möbilstationen eingebucht, als Übertragungskanäle im Funkversorgungsbereich einer Basisstation vorhanden sind, wird derselbe Downlink-Übertragungskanal mehreren mobilen Teilnehmern bzw. Mobilstationen von der Basisstation zugewiesen - vorzugsweise zeitversetzt zur Vermeidung von Kollisionen bei der Informationübertragung. Ist es erforderlich, einen Kanalwechsel durch Änderung des Downlink-Übertragungskanals oder Zuweisung eines Uplink-Übertragungskanals vorzunehmen, wird dies anhand einer Steuerinformation FL im Informationsblock BU der Mobilstation signalisiert. Dabei setzt die Ablaufsteuerung der Basisstation die Steuerinformation FL und fügt eine Kanalinformation CHI über einen von der Basisstation vergebenen neuen Downlink-Übertragungskanal oder Uplink-Übertragungskanal den Informationen im Informationsteilblock DAB an einer fest definierten Stelle hinzu. So wird beispielsweise die Steuerinformation FL dann gesetzt, wenn die Basisstation besipielsweise zwei Mobilstationen denselben Downlink-Übertragungskanal zugewiesen hat und gleichzeitig Informationen zu beiden Mobilstationen zu übertragen sind. Da die jeweils vergebenen und aktiven Downlink-Übertragungskanäle der Basisstation bekannt sind, kann sie die mögliche Kollision bereits vorab verhindern, in dem sie der Mobilstation mit dem gerade aktiven Übertragungskanal den neuen Kanal durch die Kanalinformation CHI zuweist und über den nun freien Kanal die Downlink-Informationsübertragung zu der anderen Mobilstation veranlaßt. Kommt es vor, daß dennoch mehrere Mobilstationen auf denselben Übertragungskanai gleichzeitig zugreifen, können die Informationen von der Basisstation nicht ausreichend oder nur fehlerhaft detektiert werden, was durch geeignete Fehlerkorrekturmaßnahmen behoben wird.

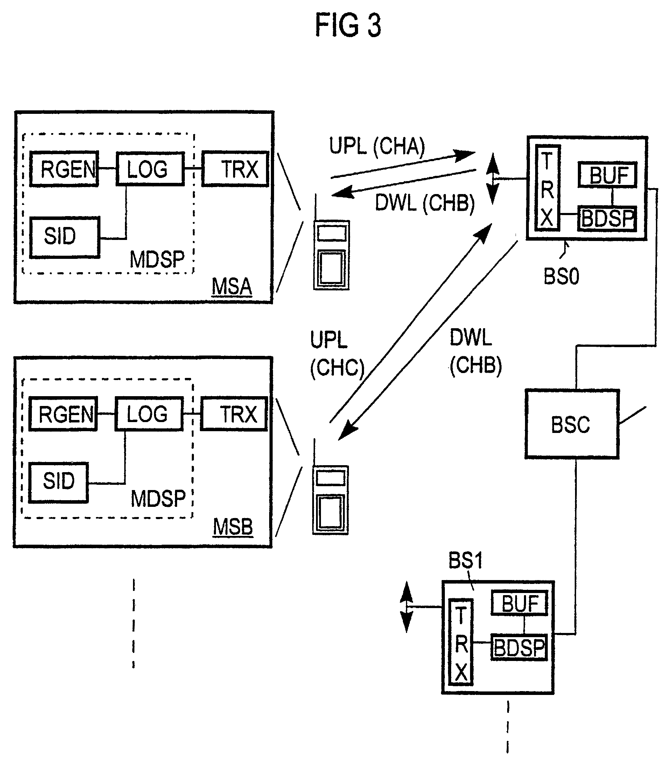

Figur 3 zeigt einen Ausschnitt aus einem Kommunikationssystem mit mehreren Mobilstationen MSA, MSB... und Basisstationen BS0, BS1... zur drahtlosen Informationsübertragung in Übertragungskanälen CHA, CHB, CHC für die Aufwärtsübertragungsrichtung UPL und die Abwärtsübertragungsrichtung DWL. Die beispielhaft dargestellten Basisstationen BS0, BS1 sind an eine Basisstationssteuerung BSC angeschlossen, die mit einer Vermittlungseinrichtung des Kommunikationssystems verbunden ist. Die gesamte Kommunikationsverbindung zwischen A-Teilnehmer (anrufender Teilnehmer) und B-Teilnehmer (angerufener Teilnehmer) ist nicht dargestellt, da die Erfindung sich auf die Luftschnittstelle und die dynamische Vergabe bzw. Auswahl der Übertragungskanäle bezieht. Es sei angenommen, daß sich die beispielhaft dargestellten beiden Mobilstationen MSA, MSB im Funkversorgungsbereich der Basisstation BS0 befinden und von ihr betreut werden. Aufbau und Arbeitsweise der Mobilstationen MSA, MSB... und der Basisstationen BS0, BS1... sind identisch und werden am Beispiel der Mobilstation MSA und der Basisstation BS0 nachfolgend erläutert. Das Kommunikationssystem ist beispielsweise ein Mobil-Kommunikationssystem nach dem GSM-Standard, ein Schnurlos-Kommunikationssystem nach dem DECT-Standard oder ein sonstiges Kommunikationssystem mit zumindest einem Vielfachzugriffsverfahren zur drahtlosen Informationsübertragung.

Die Mobilstation MSA weist ausser den üblichen Sende- und Empfangseinrichtungen TRX, die zum Aussenden der Informationen über die Luftschnittstelle und zum Empfangen der Informationen von der Luftschnittstelle angeordnet sind, eine Ablaufsteuerung MDSP für mobilstationsseitig durchzuführende Funktionen auf. Die Ablaufsteuerung MDSP umfasst beipielsweise einen digitalen Signalprozessor, der in einer Einheit RGEN eine Zufallsfolge erzeugt und in einer weiteren Einheit LOG die erzeugte Zufallsfolge mit der Teilnehmerkennung SID, die beim Einbuchen der Mobilstation MSA zugewiesen wurde, verknüpft. Aus der Verknüpfung ergeben sich Zufallszahlen, mit denen die Übertragungskanäle für die Aufwärtsübertragungsrichtung UPL aus der begrenzten Anzahl der insgesamt zur Verfügung stehenden Übertragungskanäle zufallsgesteuert ausgewählt werden. Durch die Verknüpfung der individuellen Teilnehmerkennung SID mit der Zufallsfolge wird verhindert, dass Überschneidungen von Zufallsfolgen unterschiedlicher mobiler Teilnehmer bzw. unterschiedlicher Mobilstationen auftreten. Eine alternative Lösung besteht darin, an Stelle der Teilnehmerkennung jede andere Kennung, die mobilstationsseitig erzeugt wird und die Eindeutigkeit der Mobilstation in der Funkzelle sicherstellt, mit der Zufallsfolge zu verknüpfen und die sich daraus ergebenden Zufallszahlen zur Auswahl des Übertragungskanals heranzuziehen. Auch eine direkte Verwendung der erzeugten Zufallsfolge ohne die Verknüpfung mit der Teilnehmerkennung oder einen sonstigen Kennung zur zufälligen Auswahl eines Übertragungskanal für die Aufwärtsübertragungsrichtung UPL ist möglich.

Die Mobilstation MSA sendet auf dem ausgewählten Übertragungskanal CHA in der Aufwärtsübertragungsrichtung UPL, sobald eine Informationsübertragung zur Basisstation BSO notwendig ist. Durch die über den Zufallsprozess gesteuerte Belegung der Uplink-Übertragungskanäle durch die Mobilstationen ist eine statistisch gleichmäßige Ausnutzung der begrenzt verfügbaren Übertragungskapazität erzielbar. Darüber hinaus brauchen die Mobilstationen nicht auf eine Zuweisung der Uplink-Übertragungskanäle durch die Basisstationen zu warten, was eine flexible und effiziente Ausnutzung der Uplink-Übertragungskanäle für weitere Kommunikationsverbindungen in den Sprachpausen einer Sprachübertragung bewirkt.

Gleichzeitig zur Auswahl des Uplink-Übertragungskanals CHA durch die Mobilstation MSA veranlasst die Basisstation BSO die Vergabe eines Übertragungskanals CHB für die Abwärtsübertragungsrichtung DWL. Die gezielte Vergabe des Downlink-Übertragungskanals CHB wird von einer Ablaufsteuerung BDSP in der Basisstation BSO durchgeführt. Die Ablaufsteuerung BDSP, ausgebildet als digitaler Signalprozessor, steht mit Sendeund Empfangseinrichtungen TRX zum Senden und Empfangen der Informationen über die Luftschnittstelle in Verbindung. Darüber hinaus ist an die Ablaufsteuerung BDSP ein Zwischenspeicher BUF angeschlossen, in dem Informationen zwischengespeichert werden können, falls ein Kanalwechsel für die Abwärtsübertragungsrichtung DWL durchzuführen ist und dabei ein Informationsverlust durch einen temporär blockierten Downlink-Übertragungskanal bis zur Umschaltung auf einen anderen Übertragungskanal droht. Dabei können die Informationen in einem oder mehreren Zwischenspeichern BUF teilnehmerbezogen bzw. mobilstationsbezogen für die Informationsübertragung in der Abwärtsübertragungsrichtung DWL gespeichert werden. Die Größe des Zwischenspeichers BUF wird durch eine maximal zulässige Verzögerungszeit bestimmt, die zumindest die Dauer eines Zeitschlitzes umfassen sollte, sodaß die Informationen zumindest für die Dauer der Übertragung eines Informationsblocks gespeichert werden können.

Die Vergabe des Downlink-Übertragungskanals CHB im vorliegenden Beispiel erfolgt gezielt durch mehrfache Zuordnung zu den Mobilstationen MSA und MSB. Da die jeweils aktiven Übertragungskanäle in der Abwärtsübertragungsrichtung DWL der Basisstation BS0 bekannt sind, kann diese eine Kollision durch die gleichzeitige Nutzung desselben Übertragungskanals CHB durch die Mobilstationen MSA und MSB verhindern. Dabei wird der Mobilstation MSA, die den gerade aktiven Downlink-Übertragungskanal CHB nutzt, ein neuer Downlink-Übertragunskanal zugewiesen, sowie die Informationsübertragung in der Abwärtsübertragungsrichtung DWL zur Mobilstation MSB über den nun freien Downlink-Übertragungskanal CHB veranlasst und durchgeführt (siehe auch obige Beschreibung zu Figur 2). Alternativ dazu kann die Basisstation BS0 auch der Mobilstation MSB, die den zugewisenen Downlink-Übertragungskanal CHB noch nicht nutzt, der neue Downlink-Ubertragunskanal zugewiesen werden, und die die Informationsübertragung in der Abwärtsübertragungsrichtung DWL zur Mobilstation MSB über den neuen Downlink-Übertragungskanal veranlasst und durchgeführt werden. Die Mobilstation MSA bleibt von einem Kanalwechsel verschont. Gegebenenfalls wird zusammen mit der Steuerinformation FL an die Mobilstation MSA eine Zusatzinformation zur Kennzeichnung der Mobilstation MSB, die den neuen Übertragungskanal zugeteilt erhält, gesendet. Die Mobilstation MSB nämlich hört ständig oder in kurzen Zeitabständen auf ihrem von der Basisstation BS0 zugeteilten Empfangszeitschlitz den Übertragungskanal nur ab - sodaß sie die gesendete Steuerinformation und Zusatzinformation auch empfängt und auswertet. Einer Belegung des Übertragungskanals für die Informationsübertragung bedarf es hierzu nicht.

Ausser beim Einbuchen informiert die Basisstation BSO die in ihrem Funkversorgungsbereich sich aufhaltenden Mobilstationen auch bei jeder erforderlichen Kanaländerung über den neu vergebenen Downlink-Übertragungskanal. Die Mobilstation MSB wählt ihrerseits einen Übertragungskanal CHC für die Aufwärtsübertragungsrichtung UPL durch Bilden einer Zufallsfolge unter Berücksichtigung der Teilnehmerkennung SID aus und sendet auf diesem Uplink-Übertragungskanal CHC die Informationen in einem oder mehreren unmittelbar aufeinander folgenden Informationsblöcken über die Luftschnittstelle. Die Basisstation BS0 kann auch die zufallsgesteuerte Auswahl der Uplink-Übertragungskanäle durch die Mobilstationen MSA, MSB für den Fall unterbinden, dass die Anzahl der mobilen Teilnehmer nicht größer ist als die Anzahl der freien Übertragungskanäle für diese Übertragungsrichtung. Dabei übermittelt die Basisstation BS0 an die jeweilige Mobilstation MSA, MSB eine Kanalinformation über den der Mobilstation zugewiesenen Uplink-Übertragungskanal, der von der Basisstation gezielt vorgegeben wird. Dadurch können die möglichen Kollisionen beim Zugriff mehrerer Mobilstationen auf denselben Übertragungskanal und damit Störungen im Informationsfluss vorab vermieden werden.

Der große Vorteil des erfindungsgemäßen Verfahrens und Kommunikationssystems besteht darin, die zulässige Anzahl der mobilen Teilnehmer und der im Kommunikationssystem eingebuchten Mobilstationen durch eine lernende Basisstation schrittweise an einen Optimum heranzuführen. Dazu wird in der Basisstation BS0 eine Aktivitäts- und Blockierungsstatistik angelegt und kontinuierlich aufgezeichnet. Zu Beginn der Informationsübertragung wird die Teilnehmeranzahl auf die Anzahl der Übertragungskanäle begrenzt, so dass gegenseitige Blockierungen bei der Informationsübertragung ausgeschlossen sind, aber dafür eine schlechte Ausnutzung der Übertragungskapazität gegeben ist. Erhöht die Basisstation BS0 nun die Anzahl der von ihr betreuten mobilen Teilnehmer bzw. Mobilstationen durch Vergabe der Downlink-Übertragungskanäle anhand der Mehrfachzuordnung desselben Übertragungskanals schritttweise, erhöht sich die Wahrscheinlichkeit einer Kollision mit steigender Anzahl der verschiedenen Teilnehmer bzw. Mobilstationen, die zur selben Zeit auf denselben Übertragungskanal zugreifen wollen. Die Basisstation BS0 kann diese Störungen in der Informationsübertragung durch Indikatoren wie beispielsweise eine fehlerhafte Teilnehmerkennung SID erkennen und registrieren. Durch eine statistische Bewertung der Aktivitäten und/oder Blockierungen auf den Übertragungskanälen veranlasst die Basisstation BS0 eine optimale Auslastung-der Übertragungskapazität bei noch vertretbaren Störungen der Informationsübertragung duch Erhöhung der Teilnehmeranzahl bzw. der Anzahl der von ihr betreuten Mobilstationen bei gleichbleibender Übertragungskapazität. Gegenüber einer üblichen Übertragungskapazität von beispielsweise 64 Übertragungskanälen für beide Übertragungsrichtungen UPL und DWL kann durch die Erfindung die Teilnehmeranzahl bis zu 160 gesteigert werden. Grundlage für die optimierte Auslastung der Übertragungskapazität und der begrenzten Funkressourcen ist die statistisch gleichmäßige Ausnutzung der Übertragungskanäle in der Aufwärtsübertragungsrichtung durch zufallsgesteuerte Auswahl und die gezielte Vergabe der Übertragungskanäle in der Abwärtsübertragungsrichtung anhand einer - vorzugsweise zeitiversetzten - Mehrfachzuordnung eines Downlink-Übertragungskanals zu mehreren Mobilstationen durch die Basisstation. Die Basisstation nimmt daraufhin als lernende Steuereinrichtung eine schrittweise Erhöhung der Teilnehmeranzahl bis zu einer maximalen Grenze vor, bei der die gegenseitigen Blockierungen unter der tolerierbaren Grenze bleiben.

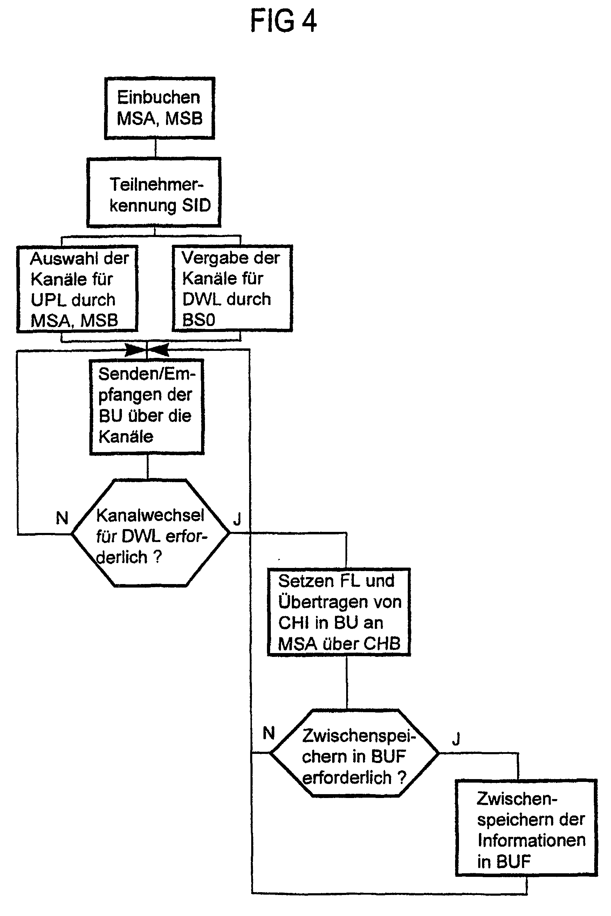

Figur 4 zeigt in einem Ablaufdiagramm die dynamische Festlegung der Übertragungskanäle für die drahtlose Informationsübertragung im Kommunikationssystem nach Figur 3. In einem ersten Schritt erfolgt das Einbuchen der mobilen Teilnehmer mit den Mobilstationen MSA, MSB im Kommunikationssystem, wobei sie Teilnehmerkennungen SID zugeordnet erhalten. Mit dem Einbuchen wählen die Mobilstationen MSA, MSB die Übertragungskanäle für die Aufwärtsübertragungsrichtung UPL zufallsgesteuert aus und senden die Informationen auf dem ausgewählten Uplink-Übertragungskanal drahtlos über die Luftschnittstelle. Gleichzeitig vergibt die Basisstation BS0 bei Einbuchen der Mobilstationen MSA, MSB die Übertragungskanäle für die Abwärtsübertragungsrichtung DWL durch Mehrfachzuordnung eines Downlink-Übertragungskanals an beide Mobilstationen und sendet zunächst auf dem gezielt zugewiesenen Übertragungskanal für die Abwärtsübertragungsrichtung DWL zur Mobilstation MSA. Die Informationen werden in Informationsblöcken BU über den ausgewählten Uplink-Übertragungskanäle bzw. zugewiesenen Downlink-Übertragungskanäle drahtlos gesendet und empfangen. Sollen gleichzeitig zu beiden Mobilstationen MSA und MSB die Informationen in Informationsblöcken BU auf demselben Übertragungskanal, der bereits für die Informationsübertragung zur Mobilstation MSA aktiv ist, übermittelt werden, ist ein Kanalwechsel für die Abwärtsübertragungsrichtung DWL erforderlich. Für diesen Fall setzt die Basisstation BS0 die Steuerinformation FL im Informationsblock BU und fügt die Kanalinformation CHI über einen neuen, von der Basisstation BS0 vergebenen Downlink-Übertragungskanal zu den Informationen im Informationsblock BU hinzu. Die Kanalinformation CHI und die gesetzte Steuerinformation FL werden im aktiven Downlink-Übertragungskanal CHB zur Mobilstation MSA übertragen, die zur weiteren Informationsübertragung den neuen Downlink-Übertragungskanal nutzen kann. Über den nun freien Downlink-Übertragungskanal CHB erfolgt die Informationsübertragung in der Abwärtsübertragungsrichtung DWL zur Mobilstation MSB, so dass die gleichzeitige Nutzung des Downlink-Übertragungskanais CHB durch beide Mobilstationen vermieden wird.

Es erfolgt in der Basisstation BS0 zusätzlich eine Abfrage, ob Informationen in den Zwischenspeicher BUF teilnehmerbezogen eingetragen werden sollen, da durch den temporär blokkierten Downlink-Übertragungskanal CHB bis zu Umschaltung auf den neuen Downlink-Übertragungskanal für die Mobilstation MSA gegebenenfalls ein Verlust der Informationen, die in der Downlink-Übertragungsrichtung zu senden sind, drohen könnte. Ist ein Zwischenspeicherschritt nicht erforderlich, kann unmittelbar im Anschluss an den Kanalwechsel die drahtlose Informationsübertragung durch Senden/Empfangen der Informationsblöcke BU über die ausgewählten Uplink-Ubertragungskanäle und über die gezielt vergebenen Downlink-Übertragungskanäle fortgesetzt werden. Für den Fall, dass zur Informationssicherung die Informationen im Zwischenspeicher BU der Basisstation abgelegt sind, werden diese aus dem Zwischenspeicher BUF wieder ausgelesen, sobald der neue Downlink-Übertragungskanal zugewiesen ist, und über die Luftschnittstelle in einem oder mehreren aufeinander folgenden Informationsblöcken BU gesendet.

## Patentansprüche

1. Verfahren zur Informationsübertragung in einem Kommunikationssystem, bei dem Informationen in Informationsblöcken (BU) gemäß einem Vielfachzugriffsverfahren für Zeitmultiplex in einer Abwärtsübertragungsrichtung (DWL) von Basisstationen (BS0) zu Mobilstationen (MSA, MSB) und in einer Aufwärtsübertragungsrichtung (UPL) von Mobilstationen (MSA, MSB) zu Basisstationen (BS0) drahtlos übertragen werden, bei dem Übertragungskanäle (CHA, CHC) für die Aufwärtsübertragungsrichtung und Übertragungskanäle (CHB) für die Abwärtsübertragungsrichtung verwendet werden, und bei dem die Übertragungskanäle (CHA, CHC) für die Aufwärtsübertragungsrichtung von den Mobilstationen (MSA, MSB) zufallsgesteuert ausgewählt werden,
**dadurch gekennzeichnet,**
- **dass** die Übertragungskanäle (CHB) für die Abwärtsübertragungsrichtung von den Basisstationen (BS0) jeweils durch Mehrfachzuordnung zu mindestens zwei Mobilstationen (MSA, MSB) vergeben werden, und
- **dass** die Übertragungskanäle (CHA, CHC, CHB) eindeutig gekennzeichnet und unterscheidbar sind.

2. Verfahren nach Anspruch 1,
**dadurch gekennzeichnet,**
**dass** jeder Informationsblock (BU) eine Teilnehmerkennung (SID), die beim Einbuchen eines mobilen Teilnehmers in das Kommunikationssystem der Mobilstation (MSA, MSB) zugewiesen wird, enthält.

3. Verfahren nach Anspruch 2,
**dadurch gekennzeichnet,**
**dass** von den Basisstationen (BS0) bei Empfang der Informationsblöcke (BU) die Teilnehmerkennung (SID) ausgewertet und die Informationen dem mobilen Teilnehmer zugeordnet werden.

4. Verfahren nach einem der vorhergehenden Ansprüche,
**dadurch gekennzeichnet,**
**dass** die Mehrfachzuordnung der Übertragungskanäle (CHB) für die Abwärtsübertragungsrichtung (DWL) von den Basisstationen (BS0) zeitversetzt durchgeführt wird.

5. Verfahren nach einem der vorhergehenden Ansprüche,
**dadurch gekennzeichnet,**
**dass** von den Basisstationen (BS0), wenn eine gleichzeitige Nutzung eines Übertragungskanals (CHB) in der Abwärtsübertragungsrichtung (DWL) durch mehrere Mobilstationen (MSA, MSB) droht, ein Kanalwechsel zu einer der Mobilstationen (MSA, MSB) signalisiert wird.

6. Verfahren nach Anspruch 5,
**dadurch gekennzeichnet,**
**dass** von den Basisstationen (BS0) der Kanalwechsel zu der Mobilstation (MSA), die den in Abwärtsübertragungsrichtung (DWL) gerade aktiven Übertragungskanal (CHB) nutzt, signalisiert wird.

7. Verfahren nach Anspruch 5,
**dadurch gekennzeichnet,**
**dass** von den Basisstationen (BS0) der Kanalwechsel zu der Mobilstation (MSB), die den in Abwärtsübertragungsrichtung (DWL) gerade aktiven Übertragungskanal (CHB) nicht nutzt, signalisiert und von dieser Mobilstation (MSB) durch Mithören auf dem aktiven Übertragungskanal empfangen wird.

8. Verfahren nach nach einem der Ansprüche 5 bis 7,
**dadurch gekennzeichnet,**
**dass** der Informationsblock (BU) des aktiven Übertragungskanals (CHB) zumindest eine Steuerinformation (FL) zur Signalisierung des Kanalwechsels und eine Kanalinformation (CHI) zur Kennzeichnung eines von der Basisstation (BS0) vergebenen neuen Übertragungskanals für die Abwärtsübertragungsrichtung (DWL) enthält.

9. Verfahren nach Anspruch 8,
**dadurch gekennzeichnet,**
**dass** die Steuerinformation (FL) im Informationsblock (BU) zur Signalisierung des Kanalwechsels von den Basisstationen (BS0) gesetzt wird.

10. Verfahren nach Anspruch 8 oder 9,
**dadurch gekennzeichnet,**
**dass** die Kanalinformation (CHI) zur Kennzeichnung des neuen Übertragungskanals an einer fest definierten Position in den Informationsblock (BU) eingefügt wird.

11. Verfahren nach den Ansprüchen 2 und 8,
**dadurch gekennzeichnet,**
**dass** die Steuerinformation (FL) zur Signalisierung des Kanalwechsels an die Teilnehmerkennung (SID) im Informationsblock (BU) angehängt wird.

12. Verfahren nach einem der Ansprüche 5 bis 11,
**dadurch gekennzeichnet,**
**dass** bei Vorliegen eines Übertragungskanals (CHB) für die Abwärtsübertragungsrichtung (DWL), der bis zur Umschaltung auf einen neuen Übertragungskanal vorübergehend blockiert ist, die Informationen von den Basisstationen (BS0) in einen Zwischenspeicher (BUF) teilnehmerbezogen eingetragen werden.

13. Verfahren nach Anspruch 12,
**dadurch gekennzeichnet,**
**dass** die Größe des Zwischenspeichers (BUF) derart gewählt wird, dass die Informationen zumindest für die Dauer der Übertragung eines Informationsblocks (BU) gespeichert werden können.

14. Verfahren nach einem der vorhergehenden Ansprüche,
**dadurch gekennzeichnet,**
**dass** zur Auswahl der Übertragungskanäle (CHA, CHC) für die Aufwärtsübertragungsrichtung (UPL) von den Mobilstationen (MSA, MSB) zumindest eine Zufallsfolge erzeugt wird.

15. Verfahren nach Anspruch 14,
**dadurch gekennzeichnet,**
**dass** zur Auswahl der Übertragungskanäle (CHA, CHC) die Zufallsfolge mit einer mobilstationsseitig erzeugten Kennung verknüpft wird.

16. Verfahren nach Anspruch 14 oder 15,
**dadurch gekennzeichnet,**
**dass** zur Auswahl der Übertragungskanäle (CHA, CHC) die Zufallsfolge mit einer Teilnehmerkennung (SID), die beim Einbuchen des mobilen Teilnehmers in das Kommunikationssytem der Mobilstation (MSA, MSB) zugewiesen wird, verknüpft wird.

17. Verfahren nach Anspruch 16,
**dadurch gekennzeichnet,**
**dass** das Zugreifen verschiedener Mobilstationen zur gleichen Zeit an den gleichen Übertragungskanal von den Basisstationen (BS0) anhand einer fehlerhaften Teilnehmerkennung (SID) in den Informationsblöcken (BU) ermittelt und gespeichert werden.

18. Verfahren nach einem der vorhergehenden Ansprüche,
**dadurch gekennzeichnet,**
**dass** die Anzahl der Mobilstationen (MSA, MSB), denen die Übertragungskanäle (CHB) für die Abwärtsübertragungsrichtung (DWL) mehrfach zugeordnet werden können, von den Basisstationen (BS0) schrittweise bis zu einer Maximalanzahl erhöht wird und dabei Informationen über Aktivitäten und/oder über Blokkierungen auf den Übertragungskanälen von den Basisstationen aufgezeichnet und zur Einstellung der Anzahl der Mobilstationen ausgewertet werden.

19. Verfahren nach einem der vorhergehenden Ansprüche,
**dadurch gekennzeichnet,**
**dass** zur Informationsübertragung das Vielfachzugriffsverfahren für Zeitmultiplex mit einem Vielfachzugriffsverfahren für Frequenzmultiplex und/oder mit einem Vielfachzugriffsverfahren für Codemultiplex kombiniert wird.

20. Verfahren nach Anspruch 19,
**dadurch gekennzeichnet,**
**dass** bei Kombination der Vielfachzugriffsverfahren für Zeitmultiplex und Codemultiplex den Mobilstationen jeweils unterschiedliche Codes (K0...K7) zur Übertragung der Informationsblöcke für jeden Zeitschlitz (ZS0...ZS7) zugeordnet werden.

21. Kommunikationssystem zur Informationsübertragung, mit
- Basisstationen (BS0, BS1) und Mobilstationen (MSA, MSB), zwischen denen Informationen in Informationsblöcken (BU) gemäß einem Vielfachzugriffsverfahren für Zeitmultiplex in einer Abwärtsübertragungsrichtung (DWL) von der Basisstation (BS0) zur Mobilstation (MSA, MSB) und in einer Aufwärtsübertragunsrichtung (UPL) von der Mobilstation (MSA, MSB) zur Basisstation (BS0) drahtlos übertragen werden,
- Übertragungskanälen (CHA, CHC) für die Aufwärtsübertragungsrichtung und Überträgungskanälen (CHB) für die Abwärtsübertragungsrichtung,
**dadurch gekennzeichnet,**
- **dass** die Mobilstationen (MSA, MSB) Mittel (MDSP) zur zufallsgesteuerten Auswahl der Übertragungskanäle (CHA, CHC) für die Aufwärtsübertragungsrichtung aufweisen,
- **dass** die Basisstationen (BS0) Mittel (BDSP) zur Vergabe der Übertragungskanäle (CHB) für die Abwärtsübertragungsrichtung jeweils durch Mehrfachzuordnung zu mindestens zwei Mobilstationen (MSA, MSB) aufweisen, und
- **dass** die Übertragungskanäle (CHA, CHC, CHB) eindeutig gekennzeichnet und unterscheidbar sind.

22. Kommunikationssystem nach Anspruch 21,
**dadurch gekennzeichnet,**
**dass** jeder Informationsblock (BU) eine Teilnehmerkennung (SID) aufweist, die beim Einbuchen eines mobilen Teilnehmers in das Kommunikationssystem der Mobilstation (MSA, MSB) zugewiesen wird.

23. Kommunikationssystem nach Anspruch 21 oder 22,
**dadurch gekennzeichnet,**
**dass** der Informationsblock (BU) eines gerade aktiven Übertragungskanals (CHB) für die Abwärtsübertragungsrichtung (DWL) eine Steuerinformation (FL) zur Signalisierung eines Kanalwechsels für den Fall, dass eine gleichzeitige Nutzung eines Übertragungskanals in der Abwärtsübertragungsrichtung durch mehrere Mobilstationen (MSA, MSB) droht, sowie eine Kanalinformation (CHI) über einen von der Basisstation vergebenen neuen Übertragungskanal für die Abwärtsübertragungsrichtung aufweist.

24. Mobilstation zur Durchführung eines Verfahrens zur Informationsübertragung in einem Kommunikationssystem, bei dem Informationen in Informationsblöcken (BU) gemäß einem Vielfachzugriffsverfahren für Zeitmultiplex in einer Abwärtsübertragungsrichtung (DWL) von Basisstationen (BS0) zu Mobilstaticnen (MSA, MSB) und in einer Aufwärtsübertragungsrichtung (UPL) von Mobilstationen (MSA, MSB) zu Basisstationen (BS0 drahtlos übertragen werden, Übertragungskanäle (CHA, CHC für die Aufwärtsübertragungsrichtung und Übertragungskanale CHB für die Abwärtsübertragungsrichtung verwendet werden, die Übertragungskanäle (CHA, CHC) für die Aufwärtsübertragungsrichtung von den Mobilstationen (MSA, MSB) zufallsgesteuert ausgewählt werden,
**dadurch gekennzeichnet,**
- **dass** sie eine Teilnehmerkennung (SID) aufweist, die die Eindeutigkeit der Mobilstation in einer Funkzelle sicherstellt,
- **dass** sie Mittel aufweist, um jedem Informationsblock (BU) ihre Teilnehmerkennung (SID) einzufügen,
- und **dass** sie Mittel aufweist zum Mithören auf dem jeweils aktiven Übertragungskanal (CHB) in Abwärtsübertragungsrichtung (DWL), auch wenn die Mobilstation den gerade aktiven Übertragungskanal (CHB) in Abwärtsübertragungsrichtung (DWL) nicht nutzt.

25. Basisstation zur Durchführung eines Verfahrens zur Informationsübertragung in einem Kommunikationssystem, bei dem Informationen in Informationsblöcken (BU) gemäß einem Vielfachzugriffsverfahren für Zeitmultiplex in einer Abwärtsübertragungsrichtung (DWL) von Basisstationen (BS0) zu Mobilstaticnen (MSA, MSB) und in einer Aufwärtsübertragungsrichtung (UPL) von Mobilstationen (MSA, MSB) zu Basisstationen (BS0) drahtlos übertragen werden, Übertragungskanäle (CHA, CHC) für die Aufwärtsübertragungsrichtung und Übertragungskanäle (CHB) für die Abwärtsübertragungsrichtung verwendet werden, die Übertragungskanäle (CHA, CHC) für die Aufwärtsübertragungsrichtung von den Mobilstationen (MSA, MSB) zufallsgesteuert ausgewählt werden,
**dadurch gekennzeichnet,**
**dass** sie Mittel (BDSP) zur Vergabe der Übertragungskanäle (CHB) für die Abwärtsübertragungsrichtung (DWL) durch Mehrfachzuordnung zu mindestens zwei Mobilstationen (MSA, MSB) aufweist, wobei die Übertragungskanäle (CHA, CHC, CHB) eindeutig gekennzeichnet und unterscheidbar sind.

## Claims

1. Method for transmitting information in a communications system in which information is transmitted wirelessly in information blocks (BU) according to a time division multiple access method from base stations (BS0) to mobile stations (MSA, MSB) in a downlink (DWL) and from mobile stations (MSA, MSB) to base stations (BS0) in an uplink (UPL), in which transmission channels (CHA, CHC) are used for the uplink and transmission channels (CHB) are used for the downlink, and in which the transmission channels (CHA, CHC) for the uplink are selected randomly by the mobile stations (MSA, MSB), **characterized in that**
- the transmission channels (CHB) for the downlink are in each case issued by the base stations (BS0) by multiple allocation to at least two mobile stations (MSA, MSB), and
- **in that** the transmission channels (CHA, CHC, CHB) are unambiguously identified and distinguishable.

2. Method according to Claim 1, **characterized in that** each information block (BU) contains a subscriber identity (SID) which is assigned to the mobile station (MSA, MSB) when a mobile subscriber registers in the communication system.

3. Method according to Claim 2, **characterized in that** the subscriber identity (SID) is evaluated by the base stations (BS0) on reception of the information blocks (BU) and the information is allocated to the mobile subscriber.

4. Method according to one of the preceding claims, **characterized in that** the multiple allocation of the transmission channels (CHB) for the downlink (DWL) is carried out with time offset by the base stations (BS0).

5. Method according to one of the preceding claims, **characterized in that** the base stations (BS0) signal a channel change to one of the mobile stations (MSA, MSB) when simultaneous utilization of a transmission channel (CHB) in the downlink (DWL) by a number of mobile stations (MSA, MSB) threatens.

6. Method according to Claim 5, **characterized in that** the base stations (BS0) signal the channel change to the mobile station (MSA) which is utilizing the transmission channel (CHB) currently active in the downlink (DWL).

7. Method according to Claim 5, **characterized in that** the base stations (BS0) signal the channel change to the mobile station (MSB) which is not utilizing the transmission channel (CHB) currently active in the downlink (DWL) and the channel change is received by this mobile station (MSB) by monitoring on the active transmission channel.

8. Method according to one of Claims 5 to 7, **characterized in that** the information block (BU) of the active transmission channel (CHB) contains at least one control information item (FL) for signalling the channel change and one channel information item (CHI) for identifying a new transmission channel for the downlink (DWL), issued by the base station (BS0).

9. Method according to Claim 8, **characterized in that** the control information item (FL) in the information block (BU) is set by the base stations (BS0) for signalling the channel change.

10. Method according to Claim 8 or 9, **characterized in that** the channel information item (CHI) for identifying the new transmission channel is inserted into the information block (BU) at a permanently defined position.

11. Method according to Claims 2 and 8, **characterized in that** the control information item (FL) for signalling the channel change is appended to the subscriber identity (SID) in the information block (BU).

12. Method according to one of Claims 5 to 11, **characterized in that** when a transmission channel (CHB) for the downlink (DWL) is present which is temporarily blocked.until the switch-over to a new transmission channel, the information is entered in a subscriber-related manner in a buffer (BUF) by the base stations (BS0).

13. Method according to Claim 12, **characterized in that** the size of the buffer (BUF) is selected in such a manner that the information can be stored at least for the duration of the transmission of an information block (BU).

14. Method according to one of the preceding claims, **characterized in that** at least one random sequence is generated by the mobile stations (MSA, MSB) for selecting the transmission channels (CHA, CHC) for the uplink (UPL).

15. Method according to Claim 14, **characterized in that** the random sequence is combined with an identity generated at the mobile station for selecting the transmission channels (CHA, CHC).

16. Method according to Claim 14 or 15, **characterized in that** the random sequence is combined with a subscriber identity (SID), which is assigned to the mobile station (MSA, MSB) when the mobile subscriber registers in the communications system, for selecting the transmission channels (CHA, CHC).

17. Method according to Claim 16, **characterized in that** the accessing of the same transmission channel by different mobile stations at the same time is determined by the base stations (BS0) by means of a faulty subscriber identity (SID) in the information blocks (BU) and is stored.

18. Method according to one of the preceding claims, **characterized in** 'that the number of mobile stations (MSA, MSB), to which the transmission channels (CHB) for the downlink (DWL) can be allocated several times, is increased in steps up to a maximum number by the base stations (BS0) and during this process information on activities and/or on blockages on the transmission channels is recorded by the base stations and evaluated for adjusting the number of mobile stations.

19. Method according to one of the preceding claims, **characterized in that**, for transmitting information, the time division multiple access method is combined with a frequency division multiple access method and/or with a code division multiple access method.

20. Method according to Claim 19, **characterized in that** when the time division multiple access method and code division multiple access method are combined, different codes (K0...K7) for transmitting the information blocks are in each case allocated to the mobile stations for each time slot (ZS0...ZS7).

21. Communication system for transmitting information, comprising
- base stations (BS0, BS1) and mobile stations (MSA, MSB) between which information is transmitted wirelessly in information blocks (BU) in accordance with a time division multiple access method from the base station (BS0) to the mobile station (MSA, MSB) in a downlink and from the mobile station (MSA, MSB) to the base station (BS0) in an uplink (UPL),
- transmission channels (CHA, CHC) for the uplink and transmission channels (CHB) for the downlink,
**characterized in that**
- the mobile stations (MSA, MSB) exhibit means (MDSP) for the random selection of the transmission channels (CHA, CHC) for the uplink,
- **in that** the base stations (BS0) exhibit means. (BDSP) for issuing the transmission channels (CHB) for the downlink in each case by multiple allocation to at least two mobile stations (MSA, MSB), and
- **in that** the transmission channels (CHA, CHC, CHB) are unambiguously identified and distinguishable.

22. Communications system according to Claim 21, **characterized in that** each information block (BU) exhibits a subscriber identity (SID) which is assigned to the mobile station (MSA, MSB) when a mobile subscriber registers in the communications system.

23. Communications system according to Claim 21 or 22, **characterized in that** the information block (BU) of a transmission channel (CHB) for the downlink (DWL), which is currently active, exhibits a control information item (FL) for signalling a channel change for the case where a simultaneous utilization of a transmission channel in the downlink by a number of mobile stations (MSA, MSB) threatens, and a channel information item (CHI) about a new transmission channel for the downlink which is issued by the base station.

24. Mobile station for carrying out a method for transmitting information in a communications system in which information is transmitted wirelessly in information blocks (BU) in accordance with a time division multiple access method from base stations (BS0) to mobile stations (MSA, MSB) in a downlink (DWL) and from mobile stations (MSA, MSB) to base stations (BS0) in an uplink (UPL), transmission channels (CHA, CHC) are used for the uplink and transmission channels (CHB) are used for the downlink, the transmission channels (CHA, CHC) for the uplink are randomly selected by the mobile stations (MSA, MSB),
**characterized in that**
- it exhibits a subscriber identity (SID) which ensures the unambiguousness of the mobile station in a radio cell,
- **in that** it exhibits means for inserting its subscriber identity (SID) in each information block (BU),
- and **in that** it exhibits means for monitoring on the respective active transmission channel (CHB) in the downlink (DWL) even if the mobile station is not using the transmission channel (CHB) currently active in the downlink (DWL).

25. Base station for carrying out a method for transmitting information in a communications system, in which information is transmitted wirelessly in information blocks (BU) in accordance with a time division multiple access method from base stations (BS0) to mobile stations (MSA, MSB) in a downlink. (DWL) and from mobile stations (MSA, MSB) to base stations (BS0) in an uplink (UPL), transmission channels (CHA, CHC) are used for the uplink and transmission channels (CHB) are used for the downlink, the transmission channels (CHA, CHC) for the uplink are randomly selected by the mobile stations (MSA, MSB),
**characterized in that**
it exhibits means (BDSP) for issuing the transmission channels (CHB) for the downlink (DWL) by multiple allocation to at least two mobile stations (MSA, MSB), the transmission channels (CHA, CHC, CHB) being unambiguously identified and distinguishable.

## Revendications

1. Procédé pour la transmission d'informations dans un système de communication, dans lequel on transmet des informations sans fil dans des blocs d'informations (BU) selon un procédé d'accès multiple pour le multiplexage temporel dans. une direction. de. transmission descendante (DWL) de stations de base (BS0) à des stations mobiles (MSA, MSB) et dans une direction de transmission montante (UPL) de stations mobiles (MSA, MSB) à des stations de base (BS0), dans lequel on utilise des canaux de transmission (CHA, CHC) pour la direction de transmission montante et des canaux de transmission (CHB) pour la direction de transmission descendante et dans lequel les canaux de transmission (CHA, CHC) pour la direction de transmission montante sont sélectionnés suivant une commande aléatoire par les stations mobiles (MSA, MSB),
**caractérisé par le fait que**
- les canaux de transmission (CHB) pour la direction de transmission descendante sont attribués par les stations de base (BS0) à chaque fois par association multiple à au moins deux stations. mobiles (MSA, MSB), et
- les canaux de transmission (CHA, CHC, CHB) sont caractérisés de manière unique et peuvent être distingués.

2. Procédé selon la revendication 1,
**caractérisé par le fait que** chaque bloc d'informations (BU) contient un identificateur d'abonné (SID) qui est attribué à la station mobile (MSA, MSB) lors de l'enregistrement d'un abonné mobile dans le système de communication.

3. Procédé selon la revendication 2,
**caractérisé par le fait que**, lors de la réception des blocs d'informations (BU), les stations de base (BS0) évaluent l'identificateur d'abonné (SID) et associent les informations à l'abonné mobile.

4. Procédé selon l'une des revendications précédentes,
**caractérisé par le fait que** l'association multiple des canaux de transmission (CHB) pour la direction de transmission descendante (DWL) est effectuée par les stations de base (BS0) avec un certain décalage dans le temps.

5. Procédé selon l'une des revendications précédentes,
**caractérisé par le fait que**, lorsqu'il existe une menace d'exploitation simultanée d'un canal de transmission (CHB) dans la direction de transmission descendante (DWL) par plusieurs stations mobiles (MSA, MSB), les stations de base (BS0) signalent un changement de canal à l'une des stations mobiles (MSA, MSB).

6. Procédé selon la revendication 5,
**caractérisé par le fait que** les stations de base (BS0) signalent le changement de canal à la station mobile (MSA) qui exploite le canal de transmission (CHB) actuellement actif dans la direction de transmission descendante (DWL).

7. Procédé selon la revendication 5,
**caractérisé par le fait que** les stations de base (BS0) signalent le changement de canal à la station mobile (MSB) qui n'exploite pas le canal de transmission (CHB) actuellement actif dans la direction de transmission descendante (DWL) et que cette station mobile (MSB) est informée du changement de canal par l'écoute du canal de transmission actif.

8. Procédé selon l'une des revendications 5 à 7,
**caractérisé par le fait que** le bloc d'informations (BU) du canal de transmission actif (CHB) contient au moins une information de commande (FL) pour la signalisation du changement de canal et une information de canal (CHI) pour la caractérisation d'un nouveau canal de transmission attribué par la station de base (BS0) pour la direction de transmission descendante (DWL).

9. Procédé selon la revendication 8,
**caractérisé par le fait que** l'information de commande (FL) dans le bloc d'informations (BU) pour la signalisation du changement de canal est affectée par les stations de base (BS0).

10. Procédé selon la revendication 8 ou 9,
**caractérisé par le fait que** l'information de canal (CHI) pour la caractérisation du nouveau canal de transmission est insérée à une position. fixée dans le bloc d'informations (BU).

11. Procédé selon les revendications 2 et 8,
**caractérisé par le fait que** l'information de commande (FL) pour la signalisation du changement de canal est adjointe à l'identificateur d'abonné (SID) dans le bloc d'informations (BU).

12. Procédé selon l'une des revendications 5 à 11,
**caractérisé par le fait que**, en présence d'un canal de transmission (CHB) pour la direction de transmission descendante (DWL) qui est bloqué temporairement jusqu'à la commutation sur un nouveau canal de transmission, les informations sont enregistrées par les stations de base (BS0) dans une mémoire intermédiaire (BUF) avec une référence à l'abonné.

13. Procédé selon la revendication 12,
**caractérisé par le fait que** la dimension de la mémoire intermédiaire (BUF) est choisie de telle sorte que les informations peuvent être mémorisées au moins pour la durée de la transmission d'un bloc d'informations (BU).

14. Procédé selon l'une des revendications précédentes,
**caractérisé par le fait que**, pour la sélection des canaux de transmission (CHA, CHC) pour la direction de transmission montante (UPL), au moins une séquence aléatoire est produite par les stations mobiles (MSA, MSB).

15. Procédé selon la revendication 14,
**caractérisé par le fait que**, pour la sélection des canaux de transmission (CHA, CHC), la séquence aléatoire est combinée à un identificateur produit du côté de la station mobile.

16. Procédé selon la revendication 14 ou 15,
**caractérisé par le fait que**, pour la sélection des canaux de transmission (CHA, CHC), la séquence. aléatoire est combinée à un identificateur d'abonné (SID) qui est attribué à la station mobile (MSA, MSB) lors de l'enregistrement de l'abonné mobile dans le système de communication.

17. Procédé selon la revendication 16,
**caractérisé par le fait que** l'accès de différentes stations mobiles en même temps au même canal de transmission est détecté par les stations de base (BS0) à l'aide d'un identificateur d'abonné (SID) erroné dans les blocs d'informations (BU) et est mémorisé.

18. Procédé selon l'une des revendications précédentes,
**caractérisé par le fait que** le nombre des stations mobiles (MSA, MSB) auxquelles les canaux de transmission (CHB) pour la direction de transmission descendante (DWL) peuvent être associés plusieurs fois est augmenté progressivement par les stations de base (BS0) jusqu'à un nombre maximal et que, ce faisant, des informations sur des activités et/ou sur des blocages sur les canaux de transmission sont enregistrées par les stations de base et sont évaluées en vue du réglage du nombre des stations mobiles.

19. Procédé selon l'une des revendications précédentes,
**caractérisé par le fait que**, pour la transmission d'informations, on combine le procédé d'accès multiple pour le multiplexage de temps avec un procédé d'accès multiple pour le multiplexage de fréquence et/ou avec un procédé d'accès multiple pour le multiplexage de code.

20. Procédé selon la revendication 19,
**caractérisé par le fait que**, lors de la combinaison des procédés d'accès multiple pour le multiplexage de temps et pour le multiplexage de code, on associe pour chaque créneau temporel (ZS0 à ZS7) aux stations mobiles à chaque fois des codes différents (K0 à K7) pour la transmission des blocs d'informations.

21. Système de communication pour la transmission d'informations, comportant
- des stations de base (BS0, BS1) et des stations mobiles (MSA, MSB) entre lesquelles des informations sont transmises sans fil dans des blocs d'informations (BU) selon un procédé d'accès multiple pour le multiplexage temporel dans une direction de transmission descendante (DWL) de la station de base (BS0) à la station mobile (MSA, MSB) et dans une direction de transmission montante (UPL) de la station mobile (MSA, MSB) à la station de base (BS0),
- des canaux de transmission (CHA, CHC) pour la direction de transmission montante et des canaux de transmission (CHB) pour la direction de transmission descendante,
**caractérisé par le fait que**
- les stations mobiles (MSA, MSB) comportent des moyens (MDSP) pour la sélection commandée de façon aléatoire des canaux de transmission (CHA, CHC) pour la direction de transmission montante,
- les stations de base (BS0) comportent des moyens (BDSP) pour l'attribution des canaux de transmission (CHB) pour la direction de transmission descendante à chaque fois par association multiple à au moins deux stations mobiles (MSA, MSB), et
- les canaux de transmission (CHA, CHC, CHB) sont caractérisés de façon unique et peuvent être distingués.

22. Système de communication selon la revendication 21,
**caractérisé par le fait que** chaque bloc d'informations (BU) comporte un identificateur d'abonné (SID) qui est attribué à la station mobile (MSA, MSB) lors de l'enregistrement d'un abonné mobile dans le système de communication.

23. Système de communication selon la revendication 21 ou 22,
**caractérisé par le fait que** le bloc d'informations (BU) d'un canal de transmission actuellement actif (CHB) pour la direction de transmission descendante (DWL) comporte une information de commande (FL) pour la signalisation d'un changement de canal s'il existe une menace d'exploitation simultanée d'un canal de transmission dans la direction de transmission descendante par plusieurs stations mobiles (MSA, MSB) et une information de canal (CHI) concernant un nouveau canal de transmission attribué par la station de base pour la direction de transmission descendante.

24. Station mobile pour la mise en oeuvre d'un procédé pour la transmission d'informations dans un système de communication, dans lequel des informations sont transmises sans fil dans des blocs d'informations. (BU) selon un procédé d'accès multiple pour le multiplexage temporel dans une direction de transmission descendante (DWL) de stations de base (BS0) à des stations mobiles (MSA, MSB) et dans une direction de transmission montante (UPL) de stations mobiles (MSA, MSB) à des stations de base (BS0), dans lequel des canaux de transmission (CHA, CHC) sont utilisés pour la direction de transmission montante et des canaux de transmission (CHB) sont utilisés pour la direction de transmission descendante et dans lequel les canaux de transmission (CHA, CHC) pour la direction de transmission montante sont sélectionnés suivant une commande aléatoire par les stations mobiles (MSA, MSB),
**caractérisée par le fait que**
- elle comporte un identificateur d'abonné (SID) qui garantit l'unicité de la station mobile dans une cellule radio,
- elle comporte des moyens pour insérer son identificateur d'abonné (SID) dans chaque bloc d'informations (BU),
- et elle comporte des moyens pour écouter le canal de transmission actuellement actif (CHB) dans la direction de transmission descendante (DWL) même si la station mobile n'utilise pas le canal de transmission actuellement actif (CHB) dans la direction de transmission descendante (DWL).

25. Station de base pour la mise en oeuvre d'un procédé pour la transmission d'informations dans un système de communication, dans lequel des informations sont transmises sans fil dans des blocs d'informations (BU) selon un procédé d'accès multiple pour le multiplexage temporel dans une direction de transmission descendante (DWL) de stations de base (BS0) à des stations mobiles (MSA, MSB) et dans une direction de transmission montante (UPL) de stations mobiles (MSA, MSB) à des stations de base (BS0), dans lequel des canaux de transmission (CHA, CHC) sont utilisés pour la direction de transmission montante et des canaux de transmission (CHB) sont utilisés pour la direction de transmission descendante et dans lequel les canaux de transmission (CHA, CHC) pour la direction de transmission montante sont sélectionnés suivant une commande aléatoire par les stations mobiles (MSA, MSB),
**caractérisée par le fait qu'**elle comporte des moyens (BDSP) pour l'attribution des canaux de transmission (CHB) pour la direction de transmission descendante (DWL) par une association multiple à au moins deux stations mobiles (MSA, MSB), les canaux de transmission (CHA, CHC, CHB) étant caractérisés de façon unique et pouvant être distingués.
